# EUROPEAN PATENT SPECIFICATION

(11) **EP 1 271 976 B1**
(45) Date of publication and mention of the grant of the patent: **04.10.2006**
(21) Application number: 02100736.4
(22) Date of filing: 20.06.2002
(51) Int. Cl.: H04Q 7/32, H04B 7/005

(54) **Cellular phone for minimal power consumption**
Zelluläres Mobilfunkendgerät für minimalen Leistungsverbrauch
Téléphone cellulaire pour consommation minimale d'énergie

(30) Priority: 22.06.2001 US 887778
(43) Date of publication of application: 02.01.2003
(73) Proprietor: TEXAS INSTRUMENTS INCORPORATED, Dallas, Texas 75251 (US)
(72) Inventor: Panasik, Carl, Garland, TX 75044 (US); Lazar, Steve, Plano, TX 75025 (US)
(74) Representative: Holt, Michael

(56) References cited:
- EP-A- 0 946 070
- WO-A-00/04649
- US-B1- 6 219 540

## Description

### Background of the Invention

### 1. Field of the Invention

This invention relates generally to cellular handset transceivers and more particularly to a cellular handset transceiver system designed to minimize power consumption in propagation situations that exceed the capability of the base station/mobile station system.

### 2. Description of the Prior Art

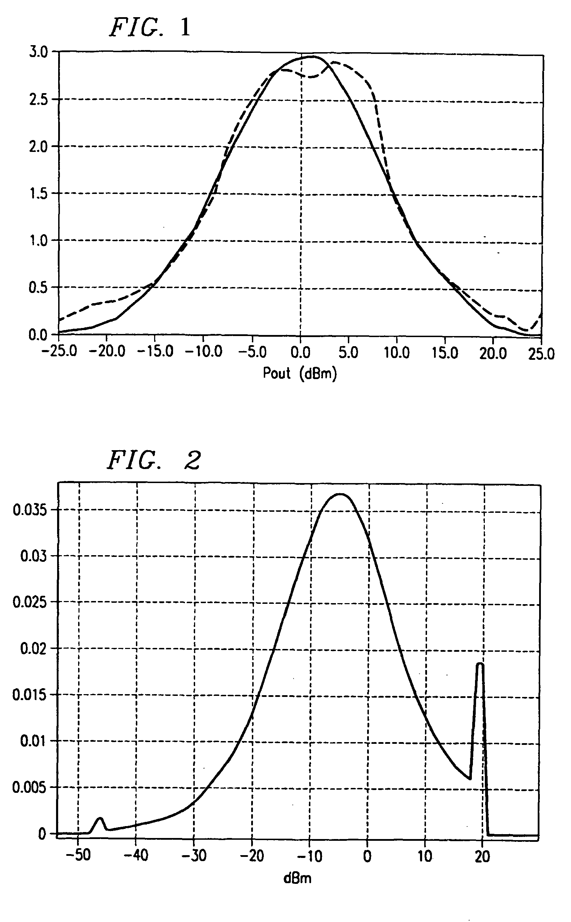

CDMA handset power amplifier output probability distributions (measured and simulated) for cellular systems show a non-Gaussian effect at maximum output power. Figure 1, for example, is a graph illustrating measured probability output power (Pout) that is fit to a normal distribution at the same Pout points for an IS-95 CDMA handset power amplifier as presented by J. Sevic, *The Time Domain and Power Amplifier Linearity and Efficiency*, Proc. Advancing the Frontiers of Microwave Radio, MTT Short Course, Apr 1998. It can be seen that a 6% peak occurs at maximum output power (25dBm). Figure 2 is a graph illustrating a simulated distribution function of output power in a WCDMA system that employs a Nokia® handset as presented by H. Lilja, H. Mattila, *WCDMA Power Amplifier Requirements and Efficiency Optimization Criteria*, IEEE Microwave Theory and Techniques Symposium (MTT-S), THF4-2, 1999. It can be seen that a 50% peak occurs at maximum power out. These power levels are commanded by the base station and are a function of the signal to noise level at the base station receiver. Figures 1 and 2 demonstrate that at high power, the curve is not symmetrical and has a distinct peak at the highest output power where the most battery power is consumed.

In view of the foregoing, a need exists for a scheme to limit mobile transmitter output in poor propagation situations to avoid wasted RF and DC power.

European patent application with publication no. 0946070 discusses in its description of related art, a method of increasing an uplink capacity in a cellular system by controlling transmission power in the cellular system and base station apparatus. The received power (desired power) of a signal in a certain link acts as interference power that disturbs other links. In the described process, the desired power from a mobile station is measured by the base station and compared with a control target level. Depending on whether the measured level of the desired power is greater or smaller than the control target level, the base station transmits a command for reducing or increasing the transmission power to the mobile station.

US-B-62195401 relates to pagers, and describes an arrangement whereby in response to an out-of-range indication two timers are started, an out-of-range (OOR) timer of a few minutes duration and an automatic shutoff (ASO) timer in the order a number of hours duration. The arrangement has such a long ASO time out prior to any power shut off so as to explicitly avoid power shut off when the mobile is temporarily out-of-range.

### Summary of the Invention

The present invention is directed to a system and method of improving cellular handset transceiver system handset efficiency and power control. According to the present invention there is provided a method of transmission power control for a mobile station in two-way communication over a wireless channel with a base station of the type which sends transmission power control commands to the mobile station, characterized by: monitoring in the mobile station data signals received from the base station; and disabling transmission from the mobile station when the received data signals indicate that the mobile station is in a shadow of the base station.

In a preferred embodiment of the present invention a knowledge of the mobile station received signal-to-noise ratio (SNR) is used to disable the mobile station transmitter and prevent a fruitless expenditure of battery power. When the mobile station received SNR falls below a set threshold, there is no point in continuing to transmit from the mobile station, as the handset is in a propagation shadow and incapable of communicating with the base station. In one aspect of the present invention, a method of operating a base station/mobile station system extends CDMA handset talk time between about 5% and at least 15%.

According to one embodiment, mobile station receiver and computing algorithms instruct the mobile station transmitter to enter into the idle condition (power) until a useful receive signal is acquired again. At that point, the mobile transmitter is ramped up to its previous power.

According to another embodiment, a mobile station transmitter does not ramp back to its idle mode (i.e. off state), but instead to a median transmit power condition that was employed during a previous period of time, such as that which was sufficient to support the link up to the point of fade.

### Brief Description of the Drawings

Other aspects, features and advantages of the present invention will be readily appreciated as the invention becomes better understood by reference to the following detailed description when considered in connection with the accompanying drawings in which like reference numerals designate like parts throughout the figures thereof and wherein:
Figure 1 is a graph illustrating measured probability power out that is fit to a normal distribution at the measured Pout points for an IS-95 CDMA handset power amplifier;
Figure 2 is graph illustrating a simulated distribution function of output power in a WCDMA system that employs a Nokia® handset power amplifier;
Figure 3 is a graph illustrating one representation of a base station received signal to noise ratio and a mobile station transmitted power level;
Figure 4 is a graph illustrating one representation of a mobile station receiver SNR, an original transmit power spectrum associated with the mobile station transmitter and an improved transmit power spectrum associated with the mobile station transmitter;
Figures 5-8 are diagrams illustrating cellular handset transceiver systems for minimal power consumption according to different embodiments of the present invention; and
Figure 9 is a diagram illustrating communication between a base station and a mobile handset via a reflected path.

### Detailed Description of the Preferred Embodiments

The present invention is best understood by first recapping a discussion of measured and simulated CDMA power amplifier output probability distribution with reference to Figures 1 and 2. As stated herein before, CDMA power amplifier output probability distributions (measured and simulated) for cellular systems show a non-Gaussian effect at maximum output power. In general, mobile station output power is proportional to the propagation loss from the mobile station to the base station. Because the mobile travels randomly through the circular cells, one would expect a Gaussian (normal) distribution of propagation loss and hence, mobile station transmitted power. Figure 1, for example, is a graph illustrating measured probability of a given power output that is fit to a normal distribution at the measured Pout points for an IS-95 CDMA handset power amplifier. It can be seen that a 6% peak occurs at maximum output power. Figure 2 is a graph illustrating a simulated distribution function of output power in a WCDMA system that employs a Nokia® handset power amplifier. It can be seen that a 50% peak occurs at maximum power out. These power levels are commanded by the base station and are a function of the signal to noise level measured at the base station receiver. Figures 1 and 2 demonstrate that at high power, the curve is not symmetrical and has a distinct peak at the highest power output where the most battery power is consumed.

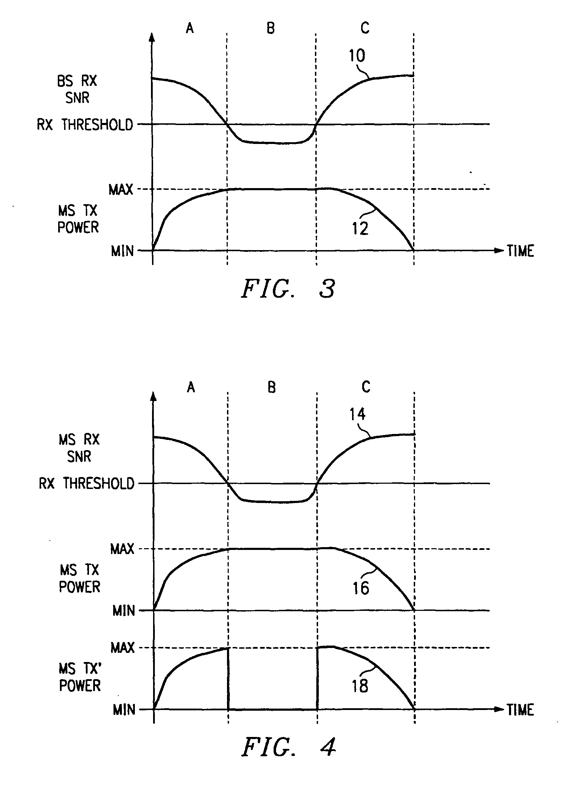

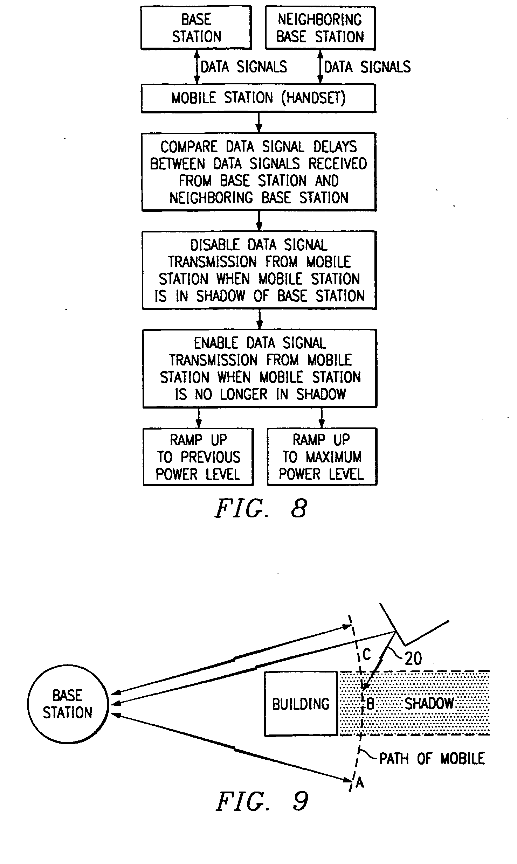

The present invention, that takes advantage of an imbalance between mobile and base station transmit power (effective radiated) levels, described herein with reference to Figures 3 and 4, is directed to a scheme to limit mobile transmitter output in poor propagation situations to avoid wasted RF and DC power. It can be appreciated that the base station transmitter is several orders of magnitude more powerful than the mobile station. The mobile station receive SNR therefore, would be much better (on average) than the base station SNR. Figure 3, for example, is a graph illustrating one representation of a base station received signal to noise ratio (SNR) 10 and a mobile station transmitted power level 12. When the mobile station starts to go into a fade (i.e. when moving from point 'a' to point 'b' along path a-b-c as seen in Figure 9), the received SNR 10 at the base station falls. The base station attempts to maintain a constant SNR by commanding the mobile station transmitter to increase its power level 12 in a constant increment (i.e. 1-dB steps according to IS-95). When the received SNR 10 at the base station is below the useable threshold (region b), communication is not possible and the mobile station is transmitting (needlessly) at its full power level 12. The base station will hold the mobile transmitter at its full power level 12 until the base station received SNR 10 improves such as seen in region c. Dwelling at full power, in this case, is the cause of the spikes seen in Figures 1 and 2.

In view of the foregoing, a technique to improve handset efficiency and power control according to one embodiment of the present invention is now set forth with reference to Figure 4 that is a graph illustrating one representation of a mobile station receiver SNR 14, an original transmit power spectrum 16 associated with the mobile station transmitter and an improved transmit power spectrum 18 associated with the mobile station transmitter. In addition to a conventional closed loop (base station receive and mobile station transmit) power control algorithm, a knowledge of the mobile station received SNR 14 is used to disable the mobile station transmitter and prevent fruitless expenditure of battery power. When the mobile station received SNR 14 falls below a set threshold (region b in Figure 4), there is no point in continuing to transmit from the mobile station, as the handset is in a propagation shadow and incapable of communicating with the base station. Even a reflected path 20 such seen in Figure 9 is insufficient for communication. The mobile station receiver and computing algorithms then instruct the mobile station transmitter to enter its idle power condition until a useful receive signal is again acquired such as seen in region c of Figure 4. When a useful receive signal is acquired such as seen in region c, the mobile station transmitter signal is ramped up to its previous power level.

The present invention is not so limited however, and it can be appreciated, for example, that the transmitter need not ramp back to an idle condition (i.e. off state), but instead to a median transmit power condition determined from a previous period of time. This power could, for example, be that which was sufficient to support the link up to fade. Such functionality can also act as a slow release AGC for the mobile station transmitter. This would be like a fast-attack/slow-release AGC on transmit power that is implemented in response to the mobile station received SNR 14 discussed herein before.

It can be appreciated there may be several methods for determining a situation where the mobile station is in a shadow of the desired base station. One method employs use of the mobile station received SNR 14 discussed above. Another method may include analyzing a loss of primary base station rake finger. Yet another method may include monitoring for an abrupt change in the delay of the received signal relative to other neighboring base stations. Any of these methods, alone or in combination, may define a shadow condition. It can be readily appreciated however, that the present invention will function in association with any technique suitable to define a shadow condition.

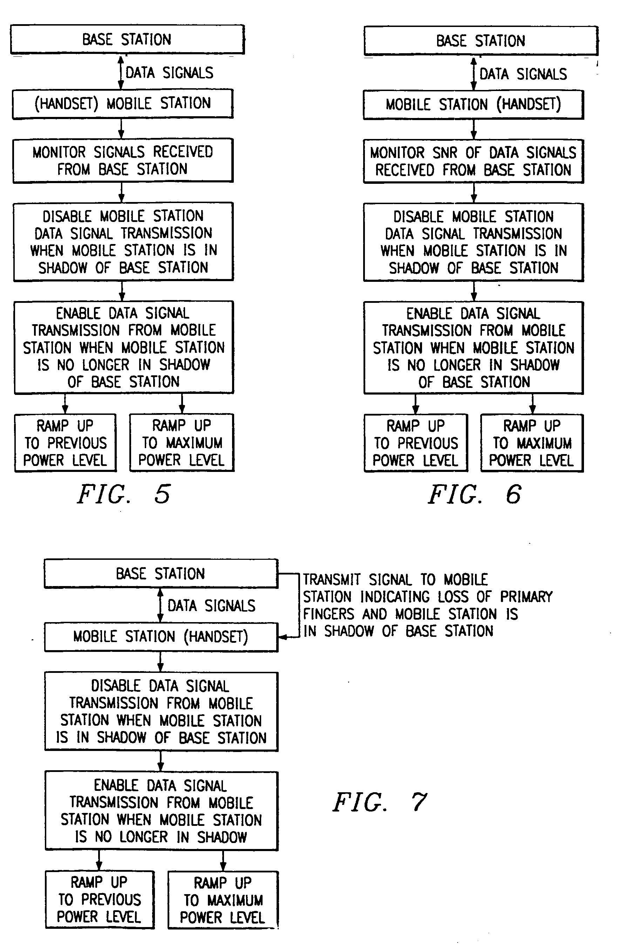

It can also be appreciated that the situation in which the mobile station is shadowed can also occur without the handset reaching full output power. In such a case, the mobile station computer will command the mobile station transmitter to enter into an idle state. When the handset is moved from behind the shadow, the mobile transmitter is again commanded by the mobile computer to invoke the previous transmit communication power. A slow release mode can be invoked as an alternative to a full shut down. In each case, the activity of ramping the mobile transmitter is generally required to fall inside a power-time specification (i.e. mask) that can be problematic since the ramping generates additional spectral noise. Figures 5-8 are diagrams illustrating cellular handset transceiver systems for minimal power consumption according to different embodiments of the present invention discussed herein before.

In view of the above, it can be seen that the present invention presents a significant advancement in the art of communication between a base station and a mobile station system to extend CDMA handset talk time. Further, this invention has been described in considerable detail in order to provide those skilled in the data communication art with the information needed to apply the novel principles and to construct and use such specialized components as are required. In view of the foregoing descriptions, it should be apparent that the present invention represents a significant departure from the prior art in construction and operation. However, while particular embodiments of the present invention have been described herein in detail, it is to be understood that various alterations, modifications and substitutions can be made therein without departing in any way from the scope of the present invention, as defined in the claims which follow.

## Claims

1. A method of transmission power control for a mobile station in two-way communication over a wireless channel with a base station of the type which sends transmission power control commands to the mobile station, including the step of:
monitoring in the mobile station data signals received from the base station; and being **characterized by** the steps of
disabling transmission from the mobile station when the received data signals indicate that the mobile station is in a shadow of the base station,
wherein the mobile station is enabled for reception of signals.

2. A method according to Claim 1, wherein the step of monitoring in the mobile station data signals received from the base station comprises:
monitoring the signal to noise ratio (SNR) of the data signal received by the mobile station from the base station to provide a determination whether the mobile station is in a shadow of the base station.

3. A method according to Claim 1, comprising, after the step of monitoring in the mobile station data signals received from the base station, the step of:
transmitting from the base station to the mobile station a signal which indicates that the mobile station is in a shadow when there is a loss of at least one primary base station rake finger signal from the mobile station.

4. A method according to Claim 1, comprising after the step of monitoring in the mobile station data signals received from the base station, the step of:
detecting an abrupt change in signal delay of the data signals received by the mobile station which provides an indication that the mobile station is in a shadow.

5. A method according to any one of Claims 1 to 4, wherein the step of disabling transmission from the mobile station when the mobile station is in a shadow of the base station comprises causing a transmitter associated with the mobile station to ramp down its power output until the mobile station transmitter enters an idle (off) state.

6. A method according to any one of Claims 1 to 4, wherein the step of disabling transmission from the mobile station when the mobile station is in a shadow of the base station comprises causing a transmitter associated with the mobile station to ramp down its power output to achieve a power condition associated with a previous period of time.

7. A method according to any one of Claims 1 to 6, further comprising the step of enabling transmission from the mobile station when the mobile station is no longer in a shadow of the base station and subsequent to disabling transmission of the data signal by the mobile station.

8. A method according to Claim 7 wherein the step of enabling transmission from the mobile station subsequent to disabling transmission of the data signal by the mobile station comprises causing a transmitter associated with the mobile station to ramp up its power output until the mobile station transmitter output power level reaches a previous power level.

9. A method according to Claim 7 wherein the step of enabling transmission from the mobile station subsequent to disabling transmission of the data signal by the mobile station comprises causing a transmitter associated with the mobile station to ramp up its power output until the mobile station transmitter output power level reaches a maximum power level.

## Patentansprüche

1. Verfahren zur Sendeleistungssteuerung für eine Mobilstation bei der Zweiwegekommunikation über einen drahtlosen Kanal mit einer Basisstation des Typs, der Sendeleistungs-Steuerbefehle zur Mobilstation sendet, mit dem Schritt:
Überwachen von der Basisstation empfangener Datensignale in der Mobilstation,
**gekennzeichnet durch** die folgenden Schritte:
Deaktivieren des Sendens von der Mobilstation, wenn die empfangenen Datensignale angeben, dass sich die Mobilstation in einem Schatten der Basisstation befindet,
wobei die Mobilstation in die Lage versetzt ist, Signale zu empfangen.

2. Verfahren nach Anspruch 1, wobei der Schritt des Überwachens von der Basisstation empfangener Datensignale in der Mobilstation aufweist:
Überwachen des Signal-Rausch-Verhältnisses (SNR) des durch die Mobilstation von der Basisstation empfangenen Datensignals, um festzustellen, ob sich die Mobilstation in einem Schatten der Basisstation befindet.

3. Verfahren nach Anspruch 1, wobei nach dem Schritt des Überwachens von der Basisstation empfangener Datensignale in der Mobilstation der folgende Schritt ausgeführt wird:
Senden eines Signals, das angibt, dass sich die Mobilstation in einem Schatten befindet, von der Basisstation zur Mobilstation, wenn es einen Verlust mindestens eines Rake-Fingersignals der primären Basisstation von der Mobilstation gibt.

4. Verfahren nach Anspruch 1, wobei nach dem Schritt des Überwachens von der Basisstation empfangener Datensignale in der Mobilstation der folgende Schritt ausgeführt wird:
Erfassen einer abrupten Änderung der Signalverzögerung der von der Mobilstation empfangenen Datensignale, wodurch ein Hinweis darauf gegeben wird, dass sich die Mobilstation in einem Schatten befindet.

5. Verfahren nach einem der Ansprüche 1 bis 4, wobei in dem Schritt des Deaktivierens des Sendens von der Mobilstation, wenn sich die Mobilstation in einem Schatten der Basisstation befindet, ein der Mobilstation zugeordneter Sender veranlasst wird, seine Ausgangsleistung rampenförmig zu verringern, bis der Sender der Mobilstation in einen Bereitschaftszustand (Ausschaltzustand) eintritt.

6. Verfahren nach einem der Ansprüche 1 bis 4, wobei in dem Schritt des Deaktivierens des Sendens von der Mobilstation, wenn sich die Mobilstation in einem Schatten der Basisstation befindet, ein der Mobilstation zugeordneter Sender veranlasst wird, seine Ausgangsleistung rampenförmig zu verringern, um eine Leistungsbedingung zu erreichen, die einem vorhergehenden Zeitraum zugeordnet ist.

7. Verfahren nach einem der Ansprüche 1 bis 6, welches weiter den Schritt des Aktivierens des Sendens von der Mobilstation, wenn sich die Mobilstation nicht mehr in einem Schatten der Basisstation befindet, und des anschließenden Deaktivierens des Sendens des Datensignals durch die Mobilstation aufweist.

8. Verfahren nach Anspruch 7, wobei in dem Schritt des Aktivierens des Sendens von der Mobilstation nach dem Deaktivieren des Sendens des Datensignals durch die Mobilstation ein der Mobilstation zugeordneter Sender veranlasst wird, seine Ausgangsleistung rampenförmig zu erhöhen, bis der Ausgangsleistungspegel des Senders der Mobilstation einen vorhergehenden Leistungspegel erreicht.

9. Verfahren nach Anspruch 7, wobei in dem Schritt des Aktivierens des Sendens von der Mobilstation nach dem Deaktivieren des Sendens des Datensignals durch die Mobilstation ein der Mobilstation zugeordneter Sender veranlasst wird, seine Ausgangsleistung rampenförmig zu erhöhen, bis der Ausgangsleistungspegel des Senders der Mobilstation einen maximalen Leistungspegel erreicht.

## Revendications

1. Procédé de contrôle de la puissance de transmission pour une station mobile en communication bilatérale sur un canal sans fil avec une station de base qui envoie des commandes de contrôle de puissance d'émission à une station mobile, comprenant l'étape de
surveillance des signaux de données de la station mobile reçus à partir de la station de base ; et **caractérisé par** les étapes de
désactivation de l'émission à partir de la station mobile lorsque les signaux de données reçus indiquent que la station mobile est masquée par rapport à la station de base,
dans lequel la station mobile est activée pour la réception des signaux.

2. Procédé selon la revendication 1 dans lequel l'étape de surveillance des signaux de données de la station mobile reçus par la station de base comprend :
la surveillance du rapport signal sur bruit (RSB) des signaux de données reçus par la station mobile à partir de la station de base, en vue de déterminer si la station mobile est masquée par rapport à la station de base.

3. Procédé selon la revendication 1 comprenant, après l'étape de surveillance des signaux de données de la station mobile reçus à partir de la station de base, l'étape de :
émission de la station de base vers la station mobile d'un signal indiquant que la station mobile est masquée lorsqu'il y a perte d'au moins un signal de doigt de râteau principal de la station de base provenant de la station mobile.

4. Procédé selon la revendication 1 comprenant, après l'étape de surveillance des signaux de données de la station mobile reçus à partir de la station de base, l'étape de :
détection d'un changement soudain du retard de signal des signaux de données reçus par la station mobile, qui indique que la station mobile est masquée.

5. Procédé selon l'une des revendications 1 à 4 dans lequel l'étape de désactivation de l'émission à partir de la station mobile lorsque la station mobile est masquée par rapport à la station de base comprend le déclenchement par un émetteur associé à la station mobile de la diminution de sa puissance de sortie jusqu'à ce que l'émetteur de station mobile passe dans un état de repos (désactivation).

6. Procédé selon l'une des revendications 1 à 4 dans lequel l'étape de désactivation de l'émission à partir de la station mobile lorsque la station mobile est masquée par rapport à la station de base comprend le déclenchement par un émetteur associé à la station mobile de la diminution de sa puissance de sortie pour atteindre une condition de puissance associée à un intervalle de temps précédent.

7. Procédé selon l'une des revendications 1 à 6 comprenant en outre l'étape d'activation de l'émission à partir de la station mobile lorsque la station mobile n'est plus masquée par rapport à la station de base et consécutive à la désactivation de l'émission de signaux de données par la station mobile.

8. Procédé selon la revendication 7 dans lequel l'étape d'activation de l'émission à partir de la station mobile, consécutive à la désactivation de l'émission de signaux de données par la station mobile, comprend le déclenchement par un émetteur associé à la station mobile de l'augmentation de sa puissance de sortie jusqu'à ce que le niveau de puissance de sortie de l'émetteur de la station mobile atteigne un niveau de puissance précédent.

9. Procédé selon la revendication 7 dans lequel l'étape d'activation de l'émission à partir de la station mobile, consécutive à la désactivation de l'émission de signaux de données par la station mobile, comprend le déclenchement par un émetteur associé à la station mobile de l'augmentation de sa puissance de sortie jusqu'à ce que le niveau de puissance de sortie de l'émetteur de la station mobile atteigne un niveau de puissance maximal.
